# EUROPEAN PATENT SPECIFICATION

(11) **EP 0 738 956 B1**
(45) Date of publication and mention of the grant of the patent: **22.12.2004**
(21) Application number: 95116570.3
(22) Date of filing: 20.10.1995
(51) Int. Cl.: G06F 3/12

(54) **Server-enhanced printer in logical printer environment**
Durch Server verbesserter Drucker in einer Umgebung von logischen Druckern
Imprimante améliorée grâce à un serveur dans un environnement d'imprimantes logiques

(30) Priority: 20.04.1995 JP 11917395
(43) Date of publication of application: 23.10.1996
(73) Proprietor: FUJI XEROX CO., LTD., Minato-ku Tokyo 107 (JP)
(72) Inventor: Suzuki, Akihiro, c/o Fuji Xerox Co., Ltd., Takatsu-ku, Kawasaki-shi, Kanagawa (JP)
(74) Representative: Grünecker, Kinkeldey, Stockmair & Schwanhäusser Anwaltssozietät

(56) References cited:
- EP-A- 0 538 059
- WO-A-92/11596
- US-A- 5 220 674
- IBM TECHNICAL DISCLOSURE BULLETIN, vol. 37, no. 12, 1 December 1994, page 605/606 XP000487912 "NETWORK PRINTING SYSTEM"

## Description

The present invention relates to a printing control device according to the preamble portion of claim 1 and to a printing method according to claim 8.

A device of the above type is shown, for instance, in US-A-5,220,674. Further information regarding the general technological background of the present invention can be gathered from EP-A-0 538 059, IBM Technical Disclosure Bulletin, vol. 37, no. 12, 1 December 1994, page 605/606 XP 000487912 "*Network Printing Systems*" and WO 92/11596 A.

A logical printer is for grouping specified combinations of characteristics and capabilities, such as locations, resolutions, utilizable media and the like, to be referred to as a logical entity. More specifically, the logical printer is for specifying one or a group of printing services set independently of an attribute of an actually installed printer through a predetermined panel display, etc., on a display device or by directly using a predetermined identifier. Needless to say, a print job specified through the logical printer must be executed by a printer actually installed in a system, that is, a physical printer, and a predetermined relationship is set between the logical printer and the physical printer. The physical printer must be provided with a function of executing a job specified by the related logical printer.

In a network environment, there are various attributes and functions of printers connected thereto, and it may occur that predetermined physical printers are provided with functions for predetermined logical printers while others are not. Under such a circumstance, a severe limitation is imposed on a logical printer utilizing environment. For example, in a case where though physical printers in locations A, B and C are to be set as execution printers for a predetermined logical printer, the function of the printer in the location A cannot execute that of the logical printer, a setter must abandon using the printer in the location A or reduce the level of the functions of the logical printer to match the printer in the location A. Thus, the limited functions of a certain printer impose a limitation on building a logical printer utilizing environment.

Relating to the present invention is one disclosed in Japanese Patent Unexamined Publication No. 3-29019. In this document, a method of building a virtual printer having only some functions of a physical printer is disclosed in a case where a user uses only those functions. In this document, however, no mention is made of the problem of building a logical printer utilizing environment caused by the limited functions of a physical printer.

### SUMMARY OF THE INVENTION

The present invention was made in view of the above-described situation and it is an object of the invention to flexibly realize a logical printer environment by compensating for the limitations when the functions of a physical printer are limited.

According to a first aspect of the invention, in order to achieve the above-described object, there is provided a printing control device according to claim 1.

According to a second aspect of the invention, there is provided a printing method according to claim 8.

### BRIEF DESCRIPTION OF THE DRAWINGS

FIG. 1 is a block diagram illustrating main parts in a preferred embodiment of the invention;
FIG. 2 is a block diagram showing a whole system structure in the embodiment;
FIG. 3 is a view illustrating a job making section in the embodiment;
FIG. 4 is a view illustrating the job making section in the embodiment;
FIGs. 5a and 5b are views illustrating the job making section in the embodiment;
FIG. 6 is a view illustrating a format of logical printer job information of a logical printer job information storage section in the embodiment;
FIG. 7 is a view illustrating a format of logical printer attribute information of a logical printer attribute information storage section in the embodiment;
FIG. 8 is a view illustrating a format of server attribute information of a server attribute information storage section in the embodiment;
FIG. 9 is a view illustrating a format of additional service attribute information of an additional service attribute information storage section in the embodiment;
FIG. 10 is a view illustrating a format of physical printer attribute information of a physical printer attribute information storage section in the embodiment; and
FIG. 11 is a flow chart showing an operation in the embodiment.

### DETAILED DESCRIPTION OF THE PREFERRED EMBODIMENT

A preferred embodiment of the invention applied to a network system will now be described with reference to the accompanying drawings.

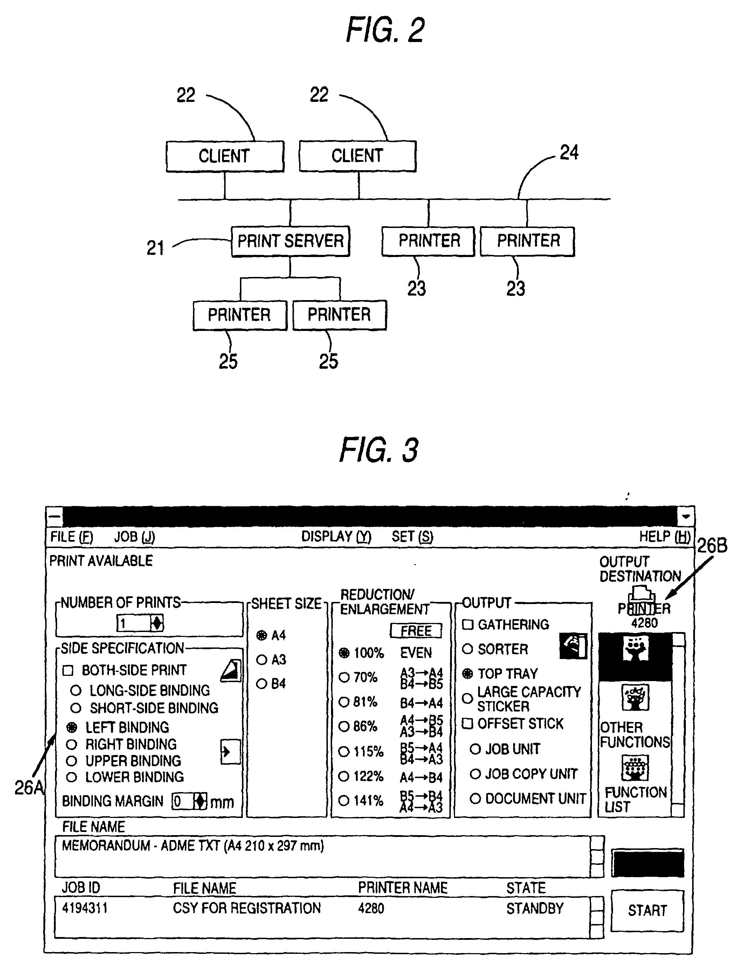

FIG. 2 shows a network system in the preferred embodiment. In the drawing, a print server 21, a plurality of clients 22 and a plurality of printers 23 are connected to one another via a network 24 such as a Local Area Network (LAN). A plurality of printers 25 are connected to the print server 21 via individual cables. The print server 21 and the clients 22 are for instance workstations or personal computers. When the clients 22 issue print jobs, these jobs are first sent to the print server 21, which performs various services thereon, and then the print jobs are sent to destination printers 23 or 25. Upon receiving the jobs the printers 23 or 25 execute them.

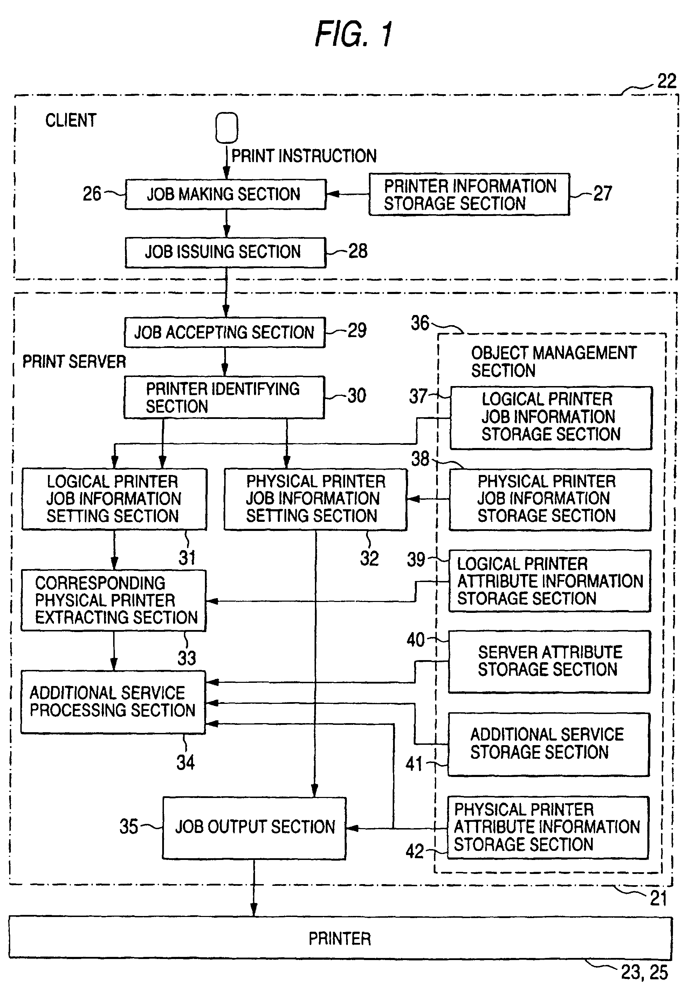

FIG. 1 shows main parts of the embodiment. In the drawing, a client 22 includes a job making section 26, a printer information storage section 27 and a job issuing section 28. These sections are constituted by software. The job making section 26 makes print jobs for both physical and logical printers. In order to make print jobs, a print instruction window (panel display) as shown in FIG. 3 is displayed on a display device (not shown) in the client 22, and specifications of an output destination printer (a logical or physical printer), a file name to be printed, print attributes such as a side, a sheet and a scale (an attribute specifying area 26A) are accepted.

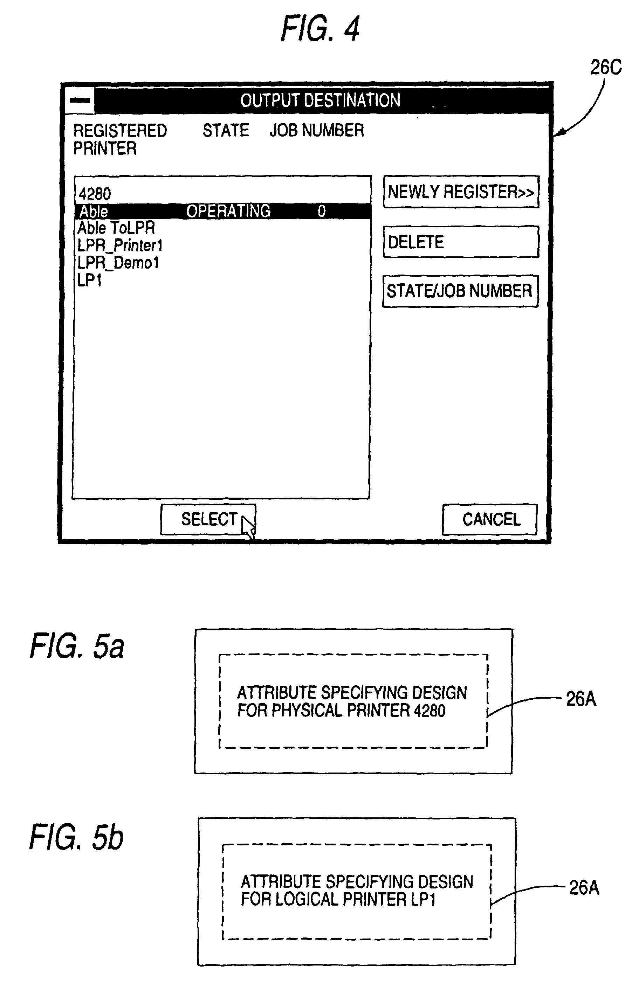

A currently specified output destination printer is displayed below a button (icon) 26B having a label "OUTPUT DESTINATION" on the upper right side in FIG. 3, and in this example a printer named "4280" is specified. In order to switch the output destination printer, the button 26B is clicked. After clicking of the button, a list 26C of output destination printers allocated to the client is displayed as shown in FIG. 4. This list includes both physical and logical printers. "LP1" is a logical printer. After switching of the output destination printer, a display of the attribute specifying area 26A is accordingly changed as shown in FIGs. 5a and 5b. Display contents of the window are stored in the printer information storage section 27.

The attribute specifying area of a physical printer corresponds to an actual attribute of the physical printer. On the other hand, the attribute specifying area of a logical printer can be set independently of an actual printer and a design can be adopted in accordance with use. A design corresponding to an existing user interface of a copying device, a printing device and the like may be adopted, making it easier for the users of the copying device and the printing device to use this.

The job making section 26 makes print jobs in accordance with instructions given by a user. A print job is composed of a print file and job data, and the job data includes a job name, a user name, a requested (logical or physical) printer name, a file name and other various job attributes. The print job is supplied to the print server 21 via the network 24.

The print server 21 includes a job accepting section 29, a printer identifying section 30, a logical printer job information setting section 31, a physical printer job information setting section 32, a corresponding physical printer extracting section 33, an additional service processing section 34, a job output section 35 and an object management section 36. These sections are constituted by software. The object management section 36 includes a logical printer job information storage section 37, a physical printer job information storage section 38, a logical printer attribute information storage section 39, a server attribute storage section 40, an additional service storage section 41 and a physical printer attribute information storage section 42.

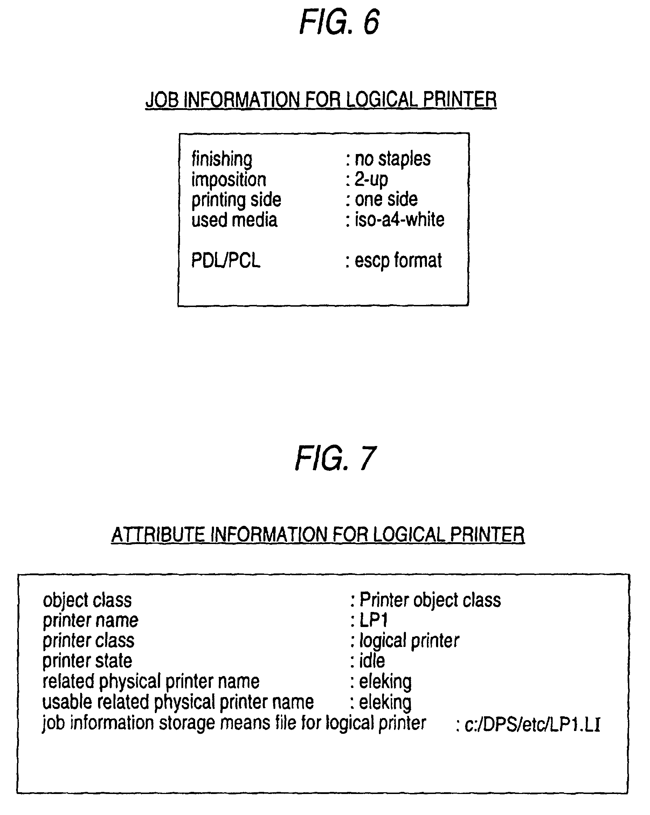

The logical printer job storage section 37 is for defining specifications of a job, that is, job information for logical printer, specified by each logical printer, and job information shown in FIG. 6 specifies no staples for finishing, 2-up (two pages are compressed to one page) for imposition, one sided printing, A4 white paper and the like. Logical printer job information corresponding to each logical printer is stored in the logical printer job information storage section 37. The physical printer job information storage section 38 is for storing specifications of a job, that is, job information for physical printer, specified by each physical printer. Detailed specifications of print jobs are determined based on logical printer job information and physical printer job information.

The logical printer attribute storage section 39 is for storing attributes of each logical printer. A logical printer attribute specifies, as shown in FIG. 7, a printer name, a printer class, a supported physical printer name and the like. These make it possible to understand correlative relations among logical and physical printers.

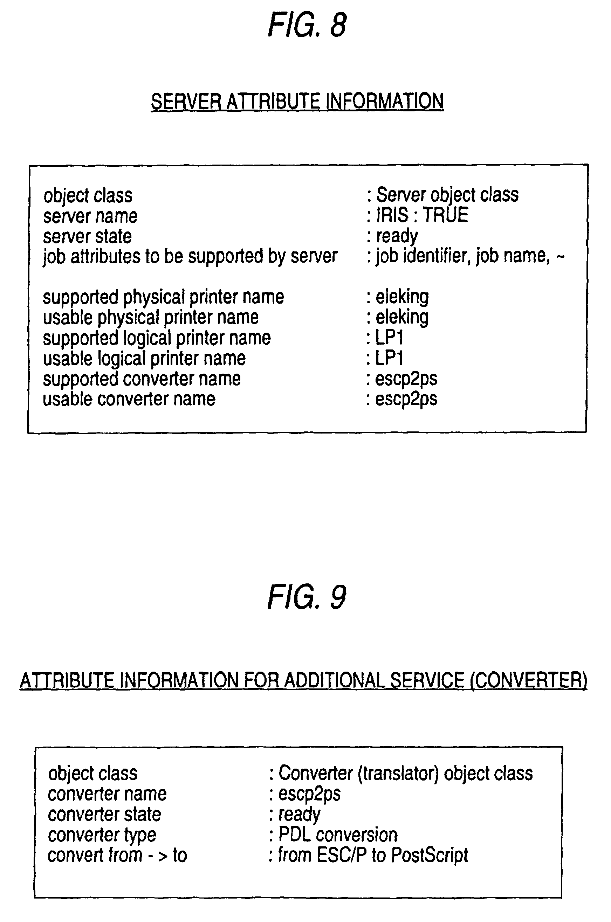

The server attribute storage section 40 is for storing server attribute information relating to the attribute of the server 21. Server attribute information specifies, as shown in FIG. 8, a server name, a supported job attribute, a supported printer, a supported converters and the like. In the case of a nonsupported job attribute or converter, a print job is rejected.

The additional service storage section 41 is for storing services added to a print job by the additional service processing section 34, that is, information on processings to be executed on behalf of an output destination physical printer. In the example shown in FIG. 9, an additional service for converting from an ESC/P file to a Post Script file is specified.

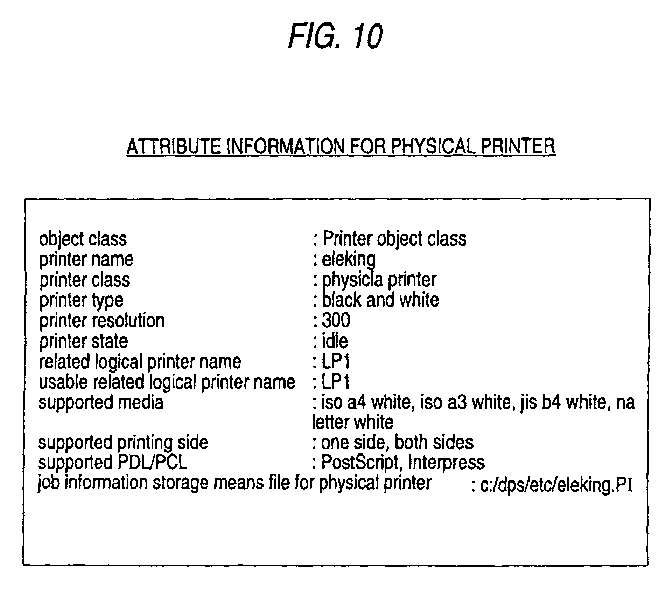

The physical printer attribute information storage section 42 is for storing physical printer attribute information for specifying an attribute of each physical printer. Physical printer attribute information specifies, as shown in FIG. 10, a printer name, a printer type, supported functions, services and the like.

The job accepting section 29 is for accepting a print job sent from the client 22 and the printer identifying section 30 is for identifying whether the print job relates to a logical printer or to a physical printer. This can be identified from the printer name of the print job.

The logical printer job information setting section 31 is for setting an attribute of a print job for a logical printer by referring to the logical printer job information storage section 37. Similarly, the physical printer job information setting section 32 is for setting an attribute of a print job for a physical printer by referring to the physical printer job information storage section 38.

The corresponding physical printer extracting section 33 is for specifying an output destination physical printer by referring to the logical printer attribute information storage section 39 and the additional service processing section 34 is for executing additional services necessary for a print job by referring to specification of supported additional services of a server attribute and specification of additional services of additional service information. For example, in a case where an additional service is a conversion from an ESC/P file to a Post Script file and a corresponding physical printer is not equipped with this conversion function, the additional service is executed by the additional service processing section 34. Needless to say, other additional services may be set.

The job output section 35 is for sending a print job set by the physical printer job information setting section 32 or one set by the logical printer job information setting section 31 and if necessary one for which an additional service is executed to a destination printer.

Next, explanation will be made of an operation of the device in the embodiment.

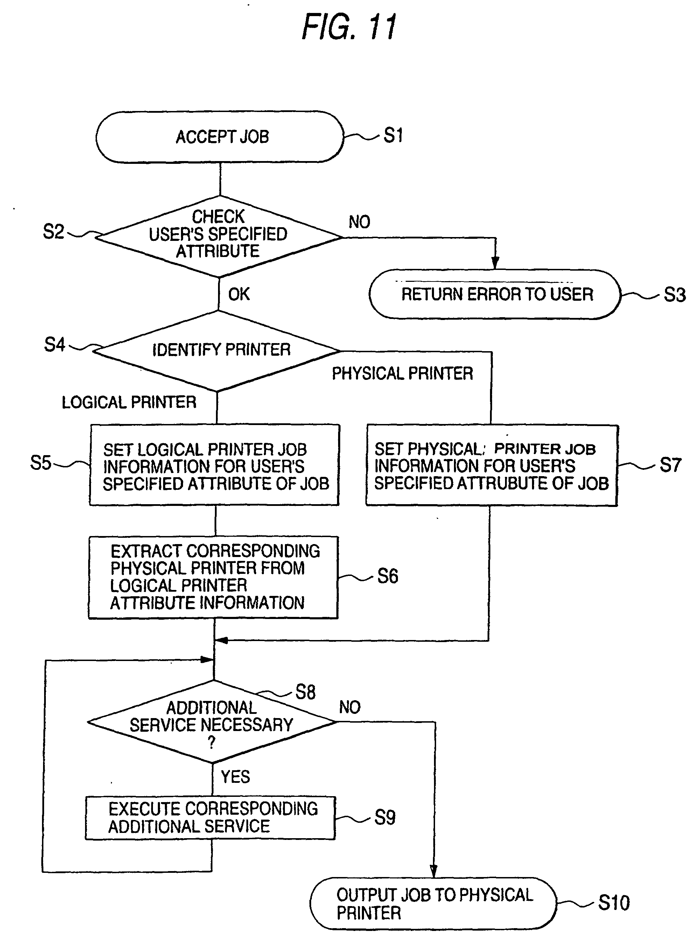

In FIG. 11, after accepting a print job (step S1), the job accepting section 29 of the print server 21 checks a user's specified attribute of the print job (step S2). This checking operation is performed by referring to supported one of server attributes. When nonsupporting of the user's specified attribute by the print server 21 is identified, an error is reported to the user (step S3). After the checking of the user's specified attribute is successfully finished, the printer identifying section 30 identifies a class of a printer, logical or physical (step S4). This identification is performed based on the print name of the print job, and if this print name is included in the logical printer attribute information as a printer name, the print job is identified to be one for a logical printer, and on the other hand if the print name is included in the physical printer attribute information as a printer name, it is identified to be one for a physical printer.

When the print job is for a logical printer, logical printer job information is adopted as a default attribute of the print job and attributes of the job are superscribed at the option of the user inputted through the window (step S5). By referring to the logical printer attribute information an output destination physical printer is specified (step S6). On the other hand, when the print job is for a physical printer, physical printer job information is adopted as a default attribute of the print job and an attribute of the job is superscribed at the option of the user (step S7).

The attributes of the print job and those of a physical printer are compared, and if the physical printer is not equipped with all the functions and services required for executing the print job, needed services are requested to the additional service processing section 34 by referring to the additional service storage section 41 (step S8). After the additional service processing section 34 executes the necessary services (step S9), the print job is sent to the physical printer (step S10).

As described above, in this embodiment, since the print server 21 performs additional services on a print job, even when a physical printer is not equipped with sufficient functions, a logical printer can be set with few limitations imposed thereby.

This embodiment is in a case where the invention is applied to a network environment. It needless to say, however, that printing method of the invention may be applied to a terminal of a host computer or a stand-alone system. Additional services are not limited to file conversion. Moreover, additional services may be performed not only in a print server but also in other processor and printer control device.

Furthermore, instead of specifying a logical printer (logical printer job) via a graphical user interface such as a panel, icon and the like, a logical printer or a job may be specified by directly specifying an identifier according to the job. Also, an application may specify a logical printer by using the identifier.

From the foregoing description of the invention, it is clear that even when an output destination physical printer is not equipped with sufficient functions and services, a logical printer can be set with few limitations imposed thereby.

## Claims

1. A printing control device (21) for providing one or a group of printing services in accordance with specification of a print job representing the one or the group of printing services set independently of an attribute of a real printer (23,25), said printing control device (21) comprising:
means (30,31,33) for comparing an attribute of the printer (23,25) for providing the one or the group of printing services in accordance with specification of the print job with an attribute of the print job and specifying a function which the printer lacks;
means (34) for executing the specified function;
means (35) for sending the print job for which the specified function has been executed to the printer (23,25),
**characterised by**
first storage means (27) for storing data specifying one or more printers (23,25) for providing the one or the group of printing services in accordance with specification of the print job;
means for accessing (26) said first storage means in accordance with the print job and specifying a printer providing the one or the group of printing services in accordance with specification of the print job; and
second storage means (39,42) for storing an attribute of the printer (23,25), wherein the attribute of the printer (23,25) for providing the one or the group of printing services in accordance with specification of the print job is extracted from said second storage means (39,42).

2. The printing device according to claim 1, further comprising:
third storage means (37,38) for storing a default attribute of the print job; and
means (31,32) for accessing said third storage means in accordance with specification of the print job and extracting the default attribute, wherein the default attribute is corrected based on an instruction given by a user at the time of specification of the print job to obtain a specific attribute of the print job.

3. The printing device according to claim 2, wherein specification of the print job is performed using a predetermined display object.

4. The printing device according to claim 3, wherein the display object is a display panel.

5. The printing device according to claim 2, wherein specification of the print job is performed by means of a job identifier.

6. The printing control device according to claim 1, wherein the printing control device is included in a print server.

7. The printing control device according to claim 1, wherein the printing control device is connected to the printer.

8. A printing method for providing one or a group of printing services in accordance with specification of a print job representing the one or the group of printing services set independently of an attribute of a real printer (23,25), said printing method comprising the steps of:
comparing an attribute of the printer for providing the one or the group of printing services in accordance with specification of the print job with an attribute of the print job and specifying a function which the printer lacks;
executing the specified function;
sending the print job for which the specified function has been executed to the printer (23,25),
**characterised by**
storing data specifying one or more printers (23,25) in first storage means (37,38) for providing the one or the group of printing services in accordance with specification of the print job;
accessing said first storage means (37,38) in accordance with the print job and specifying a printer providing the one or the group of printing services in accordance with the specification of the print job; and
storing an attribute of the printer (23,25) in second storage means (39,42), wherein the attribute of the printer (23,25) for providing the one or the group of printing services in accordance with specfication of the print job is extracted from said second storage means (39,42).

## Patentansprüche

1. Ein Drucksteuergerät (21) zum Bereitstellen eines oder einer Gruppe von Druckdiensten im Einklang mit der Spezifikation eines Druckauftrags repräsentierend den einen oder die Gruppe der Druckdienste unabhängig festgesetzt vom einem Attribut eines realen Druckers (23, 25), das Drucksteuergerät (21) umfassend:
ein Mittel (30, 31, 33) zum Vergleichen eines Attributs des Druckers (23, 25) zum Bereitstellen des einen oder der Gruppe von Druckdiensten im Einklang mit der Spezifikation des Druckauftrags mit einem Attribut des Druckauftrags und Spezifizieren einer Funktion, die der Drucker benötigt;
ein Mittel (34) zum Ausführen der spezifizierten Funktion;
ein Mittel (35) zum Versenden des Druckauftrags, für den die spezifizierte Funktion ausgeführt wurde, an den Drucker (23, 25),
**gekennzeichnet durch**
ein erstes Speichermittel (27) zum Speichern von Daten spezifizierend einen oder mehrere Drucker (23, 25) zum Bereitstellen des einen oder der Gruppe von Druckdiensten im Einklang mit der Spezifikation des Druckauftrags;
ein Mittel zum Zugreifen (26) auf das erste Speichermittel im Einklang mit dem Druckauftrag und Spezifizieren eines Druckers, der den einen oder die Gruppe von Druckdiensten im Einklang mit der Spezifizierung des Druckauftrags bereitstellt; und
einem zweiten Speichermittel (39, 42) zum Speichern eines Attributs des Druckers (23, 25), wobei das Attribut des Druckers (23, 25) zum Bereitstellen des einen oder der Gruppe von Druckdiensten im Einklang mit der Spezifikation des Druckauftrags aus dem zweiten Speichermittel (39, 42) extrahiert wird.

2. Das Druckgerät nach Anspruch 1, ferner umfassend:
ein drittes Speichermittel (37, 38) zum Speichern eines Vorgabeattributs des Druckauftrags; und ein Mittel (31, 32) zum Zugreifen auf das dritte Speichermittel im Einklang mit der Spezifikation des Druckauftrags und Extrahieren des Vorgabeattributs, wobei das Vorgabeattribut basierend auf einem vom Benutzer gegebenen Befehl zur Zeit der Spezifikation des Druckauftrags korrigiert wird, um ein spezifisches Attribut des Druckauftrags zu erhalten.

3. Das Druckgerät nach Anspruch 2, wobei die Spezifikation des Druckauftrags unter Verwendung eines vorbestimmten Anzeigeobjekts durchgeführt wird.

4. Das Druckgerät nach Anspruch 3, wobei das Anzeigeobjekt ein Anzeigefeld ist.

5. Das Druckgerät nach Anspruch 2, wobei die Spezifikation des Druckauftrags mittels eines Auftragsidentifikators durchgeführt wird.

6. Das Drucksteuergerät nach Anspruch 1, wobei das Drucksteuergerät in einem Druckserver aufgenommen ist.

7. Das Drucksteuergerät nach Anspruch 1, wobei das Drucksteuergerät an den Drucker angeschlossen ist.

8. Eine Druckmethode zum Bereitstellen eines oder einer Gruppe von Druckdiensten im Einklang mit der Spezifikation eines Druckauftrags repräsentierend den einen oder die Gruppe von Druckdiensten unabhängig festgesetzt von einem Attribut eines realen Druckers (23, 25), wobei die Druckmethode die Schritte umfasst:
Vergleichen eines Attributs des Druckers zum Bereitstellen des einen oder der Gruppe von Druckdiensten im Einklang mit der Spezifikation des Druckauftrags mit einem Attribut des Druckauftrags und Spezifizieren einer Funktion, die der Drucker benötigt;
Ausführen der spezifizierten Funktion;
Senden des Druckauftrags, für den die spezifizierte Funktion ausgeführt wurde, an den Drucker (23, 25),
**gekennzeichnet durch**
Speichern von Daten spezifizierend einen oder mehrere Drucker (23, 25) in einem ersten Speichermittel (37, 38) zum Bereitstellen des einen oder der Gruppe von Druckdiensten im Einklang mit der Spezifikation des Druckauftrags;
Zugreifen auf das erste Speichermittel (37, 38) im Einklang mit dem Druckauftrag und Spezifizieren eines Druckers, der den einen oder die Gruppe von Druckdiensten im Einklang mit der Spezifikation des Druckauftrags bereitstellt; und
Speichern eines Attributs des Druckers (23, 25) in einem zweiten Speichermittel (39, 42), wobei des Attribut des Druckers (23, 25) zum Bereitstellen des einen oder der Gruppe von Druckdiensten im Einklang mit der Spezifikation des Druckauftrags aus dem zweiten Speichermittel (39, 42) extrahiert wird.

## Revendications

1. Dispositif de commande d'impression (21) destiné à procurer un service ou bien un groupe de services d'impression en fonction d'une spécification d'un travail d'impression représentant le service ou le groupe de services d'impression établi indépendamment d'un attribut d'une imprimante réelle (23, 25), ledit dispositif de commande d'impression (21) comportant :
des moyens (30, 31, 33) destinés à comparer un attribut de l'imprimante (23, 25) destinée à procurer le service ou le groupe de services d'impression en fonction d'une spécification du travail d'impression avec un attribut du travail d'impression et à spécifier une fonction que n'a pas l'imprimante;
des moyens (34) destinés à exécuter la fonction spécifiée;
des moyens (35) destinés à envoyer le travail d'impression pour lequel la fonction spécifiée a été exécutée vers l'imprimante (23, 25),
**caractérisé par**
des premiers moyens de stockage (27) destinés à stocker des données spécifiant une ou plusieurs imprimantes (23, 25) destinées à procurer le service ou le groupe de services d'impression en fonction d'une spécification du travail d'impression;
des moyens (26) destinés à accéder aux dits premiers moyens de stockage en fonction du travail d'impression et à spécifier une imprimante procurant le service ou le groupe de services d'impression en fonction d'une spécification du travail d'impression; et
des seconds moyens de stockage (39, 42) destinés à stocker un attribut de l'imprimante (23, 25), l'attribut de l'imprimante (23, 25) destinée à procurer le service ou le groupe de services d'impression en fonction d'une spécification du travail d'impression étant extrait desdits seconds moyens de stockage (39, 42).

2. Dispositif d'impression selon la revendication 1, comportant en outre :
des troisièmes moyens de stockage (37, 38) destinés à stocker un attribut par défaut du travail d'impression; et
des moyens (31, 32) destinés à accéder aux dits troisièmes moyens de stockage en fonction d'une spécification du travail d'impression et à extraire l'attribut par défaut, l'attribut par défaut étant corrigé sur la base d'une instruction donnée par un utilisateur au moment de la spécification du travail d'impression afin d'obtenir un attribut spécifique du travail d'impression.

3. Dispositif d'impression selon la revendication 2, dans lequel la spécification du travail d'impression est réalisée en utilisant un objet d'affichage prédéterminé.

4. Dispositif d'impression selon la revendication 3, dans lequel l'objet d'affichage est un panneau d'affichage.

5. Dispositif d'impression selon la revendication 2, dans lequel la spécification du travail d'impression est réalisée au moyen d'un identificateur de travail.

6. Dispositif de commande d'impression selon la revendication 1, dans lequel le dispositif de commande d'impression est inclus dans un serveur d'impression.

7. Dispositif de commande d'impression selon la revendication 1, dans lequel le dispositif de commande d'impression est relié à l'imprimante.

8. Procédé d'impression destiné à procurer un service ou bien un groupe de services d'impression en fonction d'une spécification d'un travail d'impression représentant le service ou le groupe de services d'impression établi indépendamment d'un attribut d'une imprimante réelle (23, 25), ledit procédé d'impression comportant les étapes consistant à :
comparer un attribut de l'imprimante afin de procurer le service ou le groupe de services d'impression en fonction d'une spécification du travail d'impression avec un attribut du travail d'impression et spécifier une fonction que n'a pas l'imprimante;
exécuter la fonction spécifiée;
envoyer le travail d'impression pour lequel la fonction spécifiée a été exécutée vers l'imprimante (23, 25),
**caractérisé par** le fait de
stocker des données spécifiant une ou plusieurs imprimantes (23, 25) dans des premiers moyens de stockage (27) afin de procurer le service ou le groupe de services d'impression en fonction d'une spécification du travail d'impression;
accéder aux dits premiers moyens de stockage (37, 38) en fonction du travail d'impression et spécifier une imprimante procurant le service ou le groupe de services d'impression en fonction d'une spécification du travail d'impression; et
stocker un attribut de l'imprimante (23, 25) dans des seconds moyens de stockage (39, 42), l'attribut de l'imprimante (23, 25) destinée à procurer le service ou le groupe de services d'impression en fonction d'une spécification du travail d'impression étant extrait desdits seconds moyens de stockage (39, 42).
